# EUROPÄISCHE PATENTANMELDUNG

(11) **EP 4 481 458 A1**
(43) Veröffentlichungstag der Anmeldung: **25.12.2024**
(21) Anmeldenummer: 24183094.2
(22) Anmeldetag: 19.06.2024
(51) Int. Cl.: G02B 7/182, G02B 5/08, B23K 26/21, H01S 3/08, H01S 3/13

(54) **MEHRSTUFIGES VERFAHREN ZUR MONTAGE UND ZUM FÜGEN EINES OPTISCHEN RESONATORS UND OPTISCHER RESONATOR**

(30) Priorität: 22.06.2023 DE 102023116485
(71) Anmelder: Layertec GmbH, 99441 Mellingen (DE)
(72) Erfinder: BURKHARDT, Thomas, 99441 Mellingen (DE); HANKE, Philipp, 99441 Mellingen (DE); DRECHSLER, Max, 99441 Mellingen (DE)
(74) Vertreter: Gleim Petri Patent- und Rechtsanwaltspartnerschaft mbB

(57) **Zusammenfassung**

Die Erfindung betrifft ein mehrstufiges Verfahren zur Montage und zum Fügen eines optischen Resonators und einen optischen Resonator.

Mit dem erfindungsgemäßen Verfahren werden die Spiegel 1, 2 eines Resonators mit dessen Abstandshalter nach der Justage zueinander durch Ansprengen über eine vorläufige Verbindung miteinander verbunden, in der die Justierlage fixiert wird. Nach Prüfung des Resonators wird die vorläufige Verbindung durch Laserschweißen final fixiert oder die vorläufige Verbindung wird gelöst und nach erneuter Justierung wird erneut angesprengt und geprüft. Ein erfindungsgemäßer optischer Resonator weißt modifizierte zum Ansprengen geeignete Spiegel auf.

## Beschreibung

Optische Resonatoren (optische Kavitäten) finden Verwendung z.B. als Laserresonatoren, zur Frequenz- bzw. Wellenlängen- und Modenselektion und -stabilisierung, im Bereich der Messtechnik für hochauflösende Spektroskopie und Cavity-Ring-Down Spektroskopie und in der Metrologie. Optische Resonatoren sehr hoher Finesse stellen Referenzen für optische Atomuhren bzw. einen optischen Frequenzstandard, stabilisierte Lasersysteme mit ultra-schmaler Bandbreite und optische Frequenzkämme dar. Insbesondere die Möglichkeit der Selektion und Stabilisierung optischer Frequenzen ist dabei von Interesse, wobei die Wellenlänge des Lichts im Resonator in direktem Zusammenhang zum Abstand der Spiegel zueinander, also mit der geometrischen Länge des Abstandshalters (Resonatorgrundkörper) steht.

Ein optischer Resonator enthält eine Anordnung von mindestens zwei Spiegeln und einem Abstandshalter (Spacer, Resonatorgrundkörper). Die mindestens zwei Spiegel sind an dem Abstandshalter montiert, womit ihr Abstand und ihre Justierung zueinander hergestellt und fixiert ist. Die konkrete Ausführung der Anordnung ist abhängig von der Geometrie des Spiegelaufbaus. Üblich sind bei Resonatoren mit zwei Spiegeln planare Resonatoren (beide Spiegel sind eben), konzentrische und konfokale Resonatoren (beide Spiegel sind sphärisch), sowie semikonfokale Resonatoren (ein Spiegel ist eben, ein Spiegel ist sphärisch), neben anderen, z.B. instabilen Resonatorgeometrien.

Unter Montage wird der Zusammenbau von Bauteilen und / oder Baugruppen zu Produkten bzw. Baugruppen mit höherem Wertschöpfungsstatus nach einem Funktionsplan bzw. zu erfüllenden Funktionskriterien verstanden (gemäß DIN ISO 8593).

Unter Fügen wird das Verbinden zweier oder mehrerer Werkstücke mit geometrisch bestimmter fester Form oder das Verbinden der Werkstücke mit formlosen Stoff, wobei der Zusammenhalt zwischen den einzelnen Elementen jeweils örtlich geschaffen und vermehrt wird, verstanden (ebenfalls gemäß DIN ISO 8593).

Optische Resonatoren werden gemäß dem Stand der Technik aus separaten Einzelteilen z.B. zwei Spiegeln und einem Abstandshalter hergestellt. Der Abstandshalter ist dabei üblicherweise aus dem gleichem Material wie die anzubringenden Spiegel gefertigt, typisch ist Quarzglas oder ein anders Glas, z.B. ULE, oder eine Glaskeramik mit einem nur geringen Wärmeausdehnungskoeffizienten. Die Geometrie des Abstandshalters ergibt aus den Bedürfnissen der Anwendung. Typisch sind hier z.B. die zylindrische Form, die zylindrische Form mit Kerbe/Nut oder die Form eines prismatischen Körpers, wie eines Würfels ohne Würfelecken.

Vordergründig für die gewählte Geometrie und Materialpaarung sind Aspekte der Längenstabilität, also einer geringen thermischen Ausdehnung, des geringen thermischen Rauschens, geringer mechanischer Verluste, aber auch die hinsichtlich Verformung und Schwingungen bedeutsame geeignete mechanische Unterstützung und Befestigung des optischen Resonators im übergeordneten System.

Für optische Resonatoren hoher Finesse, z.B. > 300000, ergeben sich insbesondere folgende Anforderungen:
- Mechanische Längenstabilität des Resonators, beeinflusst durch den Abstandshalter, die Spiegel mit ihrem Spiegelsubstrat und ihrer Funktionsschicht, sowie die Verbindung dieser Komponenten miteinander;
- Geringe Hysterese bei thermisch induzierter Längenänderung; dies bestimmt die Auswahl der möglichen Materialien für das Spiegelsubstrat und den Abstandshalter
- Widerstand und Robustheit gegen verschiedene Lastfälle, wie wechselnde Umgebungsbedingungen, Temperatur-und Luftfeuchteschwankungen, mechanische Lasten, insb. Schock und Vibrationen, beispielsweise unter Transportbedingungen und im Betriebsfall
- eine maximal geringe mechanische Deformation bei Einwirken von Beschleunigungskräften
- eine maximal geringe alterungsbedingte Längenänderungen insbesondere des Abstandshalters und Langzeitstabilität der Fügeverbindung
- Miniaturisierbarkeit für Einsatzfelder mit begrenztem Volumen-/Massebudget

Aus den genannten Anforderungen an einen optischen Resonator lassen sich folgende Rahmenbedingungen für die Montage und die Fügung der Einzelteile des optischen Resonators ableiten:
- Die Verbindung zwischen den Einzelteilen soll ohne zusätzliche Verbindungswerkstoffe und Zwischenschichten ausgebildet werden.
- Die Verbindung soll dauerhaft, endgültig und langzeitstabil sein.
- Die Ausbildung der Verbindung soll den eingestellten Justierzustand der Einzelteile nicht verändern.
- Die Verbindung soll gegen klimatische Wechsellasten, Luftfeuchtigkeit, thermischen Schock sowie verschiedene mechanische Belastungen, wie Schock und Vibration robust und stabil sein.
- Die Verbindung soll gegen das Wirksamwerden randnaher Defekte und vor vom Rand her eindringender Feuchtigkeit schützen.
- Die Verbindung soll eine hohe Festigkeit aufweisen, auch für kleine Fügeflächen, da dies die Miniaturisierung der Einzelteile erlaubt.
- Die Verbindungsbildung soll räumlich definiert begrenzt gestaltbar sein.
- Während des Fügens soll eine Erwärmung über die Fügezone hinaus vermieden werden.

Ein in der Optikfertigung verbreitetes Verfahren zum Fügen von optischen Einzelteilen, welches ohne zusätzlich Verbindungswerkstoffe auskommt ist das Ansprengen (Versprengen, optisches Kontaktieren).

Das Ansprengen basiert auf den Adhäsionskräften zwischen sich berührenden optischen Flächen hoher Qualität hinsichtlich Passe, Rauheit und Sauberkeit. Für diese Fügevariante müssen die Fügepartner ihnen zugewandte Flächen aufweisen die entweder plan sind oder eine identische Oberflächenkrümmung mit einer sehr hohen Formtreue aufweisen. Sie müssen optische Qualität besitzen, d.h. diese Flächen müssen durch optische Politurprozesse auf hohe Ebenheit und geringe Rauheit bearbeitet sein. Die Körperkanten sollten facettiert werden. Alle Einzelteile sind durch geeignete Reinigungsschritte derart zu säubern, dass keine Verunreinigungen, insbesondere in Form von Partikeln und filmischen Verunreinigungen vorhanden sind.

Nachteilig bei dieser Fügevariante ist die geringe Beständigkeit versprengter Verbindungen gegen klimatische Wechsellasten, Luftfeuchtigkeit, thermischen Schock, sowie verschiedene mechanische Belastungen, wie Schock und Vibration. Die geringe Beständigkeit der Verbindung schließt die Verwendung des Verfahrens und derart hergestellter optischer Resonatoren unter besonders anspruchsvollen Umgebungsbedingungen, wie sie beispielsweise in der Luft- und Raumfahrt zu finden sind, aus. Die geringe Festigkeit der Verbindung erlaubt es zudem nicht, die Einzelteile weiter zu verkleinern und damit die gefügte Baugruppe zu miniaturisieren, da bei weiterer Verkleinerung der Fügeflächen die Festigkeit der Verbindung in zu hohem Maß geschwächt wird. Die Festigkeit versprengter Verbindungen kann insbesondere durch Oberflächendefekte am Rand des Abstandshalters vermindert werden, welche sich bei Belastung vergrößern. Ein Angriff durch Feuchtigkeit, z.B. bei hoher Luftfeuchtigkeit oder bei Betauung, erfolgt ebenfalls vom Rand her, da Wasser hier zwischen die Fügeflächen eindringen, die Verbindung stören und die Festigkeit herabsetzen kann. Nachteilig ist auch, dass ein Ansprengen nicht zwischen Fügepartnern mit einer unterschiedlichen Oberflächenform möglich ist.

Im Beitrag: "Ultrakurzpulslaserschweißen von Glaswerkstoffen für die Montage optischer Baugruppen" von Burkhardt, T., Schmitz, P., Drache, F. und Schippel, erschienen in "Laser und Verfahren für die digitale Fertigungstechnologie", S. 147 - 156, Proceedings der 13. Jenaer Lasertagung, DVS-Berichte Band 384, ISBN 978-3-96144-208-9, 2022, ist der Stand der Technik zum Laserschweißen mit ultrakurzen Pulsen im fs-bzw. ps-Regime in transparenten Materialien beschrieben. Dieses Verfahren basiert auf der nichtlinearen Absorption der Strahlungsenergie im Fokuspunkt und der Wärmeakkumulation durch die Wechselwirkung einer Vielzahl von aufeinander folgenden Pulsen bei Repetitionsraten im hohen kHz-bzw. MHz- Bereich.

Ein wesentlicher Vorteil dieser Fügemethode ist die lokal begrenzte Erwärmung der zu fügenden Einzelteile im Gegensatz zu Laserschweißverfahren mit linearer Absorption, z.B. mit einem cw CO2-Laser. Der räumlich stark begrenzte Eintrag von Strahlungsenergie erlaubt es, optische Baugruppen mit hoher Genauigkeit und sehr geringer Beeinflussung der Einzelteile und ihrer optischen Funktionsschichten zu erzeugen. Für das Fügen zweier Partner ist es notwendig, die Wärmeeinflusszone gezielt über die Grenzschicht zwischen diesen Partnern auszubilden. Bei geeignet gewählten Prozessparametern, insbesondere Pulsenergie, Pulsdauer, Repetitionsrate und Vorschubgeschwindigkeit bei Verwendung von Fokusoptiken mit hoher numerischer Apertur, können Wärmeeinflusszonen in der Größe von einigen zehn Mikrometer erzielt werden. Diese Begrenzung des Schmelzpools führt zudem zur Minimierung von Spannungen und Rissen im Glas. Förderlich für die Minimierung von Spannungen ist zudem eine symmetrische Form der Schmelzblase. Das optische Kontaktieren der Partner vor dem Schweißen verhindert die Bildung freier Oberflächen des Schmelzpools und unterdrückt so die eingefrorenen Spannungen durch Schrumpf beim Abkühlen. Geeignet gewählte Bahnführungsstrategien, z.B. Einzelschmelzpunkte gegenüber Schmelzlinien, steigern zudem die mechanische Festigkeit, z.B. für Quarzglas auf bis zu 85 % Volumenfestigkeit, da die Rissausbreitung vermindert wird.

Für die Herstellung eines optischen Resonators kann es von Nachteil sein, dass eine durch Ultrakurzpulslaserschweißen hergestellte Fügeverbindung nicht wieder lösbar ist. Das ist dann gegeben, wenn der optische Resonator die an ihn gestellten Anforderungen nicht erfüllt, weil die Relativlage der Spiegel zueinander und zum Abstandshalter nicht in der Toleranz liegen. Der optische Resonator ist dann unbrauchbar.

Es ist die Aufgabe der Erfindung ein Verfahren zur Montage und zum Fügen eines optischen Resonators bei dem die Einzelteile durch ein Ultrakurzpulslaserschweißen stoffschlüssig verbunden werden zu finden, bei dem der optische Resonator die an ihn gestellten Anforderungen gesichert erfüllt.

Es ist auch die Aufgabe der Erfindung einen optischen Resonator so zu modifizieren, dass das erfindungsgemäße Verfahren zu dessen Herstellung anwendbar ist.

Die Aufgabe für ein Verfahren wird mit einem mehrstufigen Verfahren zur Montage und zum Fügen eines optischen Resonators mit folgenden Verfahrensschritten gefunden: a) Bereitstellen eines Abstandshalters mit wenigstens zwei Fügeflächen und mindestens zwei Spiegeln, jeweils ein Spiegelsubstrat und eine Funktionsschicht aufweisend, wobei die Funktionsschicht einen Funktionsbereich und einen Fügebereich bildet, b) Reinigen der Fügeflächen und der Funktionsschichten, c) Montage und Justage der mindestens zwei Spiegel am Abstandshalter, so dass jeweils der Funktionsbereich an einen im Abstandshalter ausgebildeten Resonatorraum grenzt und der Fügebereich einer der Fügeflächen gegenüberliegt, d) Vorläufiges Fügen der mindestens zwei Spiegel an dem Abstandshalter, wobei die Spiegel mit ihren Fügebereichen an die Fügeflächen eine Grenzfläche bildend angesprengt werden, e) Prüfen der Funktionsfähigkeit des optischen Resonators und f) Endgültiges Fügen der Fügebereiche an die Fügeflächen durch Laserscheißen mit einer Laserstrahlung eines Ultrakurzpulslasers, wenn die Funktionsfähigkeit bestätigt wird oder Wiederholung der Verfahrensschritte b - e, wenn die Funktionsfähigkeit nicht bestätigt wird.

Vorteilhaft wird ein für das Laserschweißen erforderlicher Fügedruck durch die mit dem Ansprengen gebildeten Adhäsionskräfte bewirkt. Dadurch kommen keine Werkzeuge zum Einsatz über welche Druck in den Fügebereich eingetragen wird und die ein ungestörtes Eintragen der Laserstrahlung behindern könnten.

Beste Ergebnisse für die finale Verbindung entstehen, wenn die Laserstrahlung jeweils über die Spiegel auf oder an die durch das Ansprengen gebildete Grenzfläche fokussiert wird.

Bei einem typischerweise ringförmigen Funktionsbereich des Spiegels ist es vorteilhaft, wenn eine den Funktionsbereich 6 einschließende ringförmige Schweißbahn gebildet wird. Ebenso können nicht umlaufend geschlossene Kontouren für Schweißbahnen, räumlich begrenzte Schweißblasen bzw. eine beliebige Anordnung von einzelnen Schweißblasen im Fügebereich geeignet sein.

Die Aufgabe für einen optischen Resonator wird mit wenigstens zwei Spiegeln und einem Abstandshalter, mit wenigstens zwei Fügeflächen, wobei die zwei Spiegel, jeweils ein Spiegelsubstrat und eine Funktionsschicht aufweisen und die Funktionsschicht jeweils einen Funktionsbereich bildet, der an einen im Abstandshalter ausgebildeten Resonatorraum grenzt und einen Fügebereich bildet, der mit einem der Fügeflächen über eine Schweißbahn stoffschlüssig verbunden ist, dadurch gelöst, dass der Funktionsbereich wenigstens eines der wenigstens zwei Spiegel eine sphärische, asphärische oder freigeformte Form aufweist und die Fügebereiche aller Spiegel Planflächen darstellen.

Bevorzugt sind die Fügebereiche jeweils ringförmig sind und weisen einen größeren Innendurchmesser auf als der Resonatorraum einen Außendurchmesser aufweist, in eine der Fügefläche mündend.

Bevorzugt ist die Schweißbahn schmaler als der Fügebereich, womit ein durch das Laserschweißen bewirkter Wärmeeintrag nicht unmittelbar an den Funktionsbereich angrenzend erfolgt, was für die Funktionsschicht innerhalb des Funktionsbereiches schonend ist.

Indem die Schweißbahn, welche schmaler als der Fügebereich ist, an eine äußere Flächenbegrenzung des Fügebereiches angrenzt, wir eine nach außen hin gesichert, dauerhaft dichte Verbindung geschaffen.

Die Erfindung wird nachfolgend an Hand eines Ausführungsbeispiels näher erläutert.

Hierzu zeigt:
- Fig. 1: eine Schnittdarstellung eines optischen Resonators.
- Fig. 2: einen vergrößerten Ausschnitt der Schnittdarstellung gemäß Fig. 1 und
- Fig. 3: eine Seitenansicht mit der Darstellung ausgewählter Bereiche

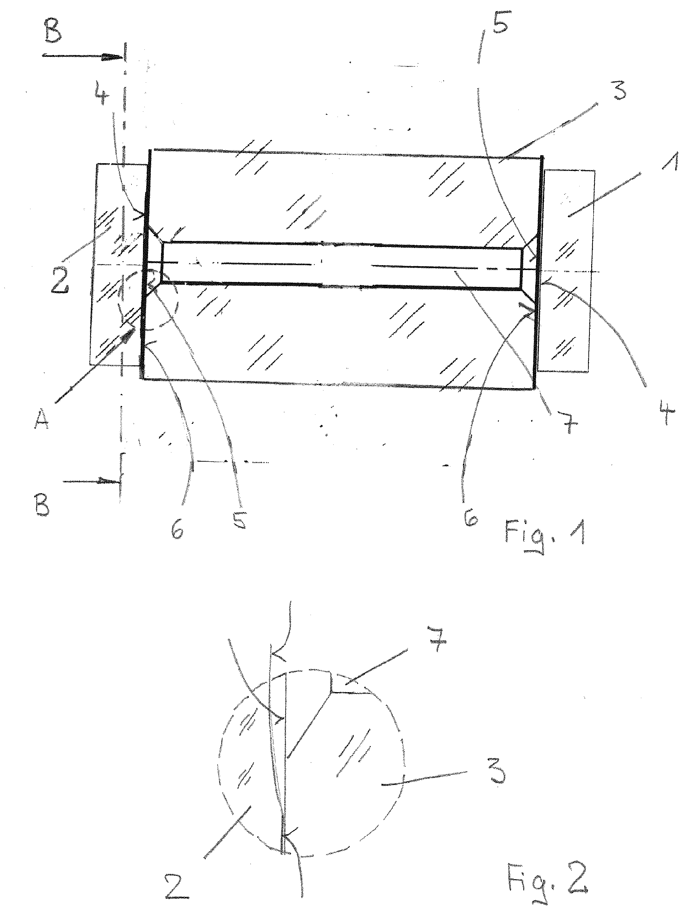

Das Verfahren wird anhand eines Resonators mit zwei Spiegeln 1, 2 beschrieben. Diese können eine plane, sphärische, asphärische oder freigeformte Spiegelfläche aufweisen. In dem in **Fig. 1** gezeigten ersten Ausführungsbeispiel enthält der optische Resonator konkret einen Planspiegel 1 und einen Konkavspiegel 2. Das Verfahren ist ebenso anwendbar auf Resonatoren mit mehr als zwei Spiegeln.

Das Verfahren beginnt mit der Bereitstellung von zwei Spiegeln 1, 2 und eines Abstandshalters 3, die miteinander zu einem optischen Resonator verbunden werden sollen. Die Spiegel 1, 2 bestehen jeweils aus einem Spiegelsubstrat und einer Funktionsschicht, welche die Spiegelfläche bildet.

Unabhängig von der Form der Spiegelfläche der Spiegel 1, 2 lassen sie sich die Spiegelflächen jeweils in einen Funktionsbereich 5 und einen Fügebereich 6 unterteilen.

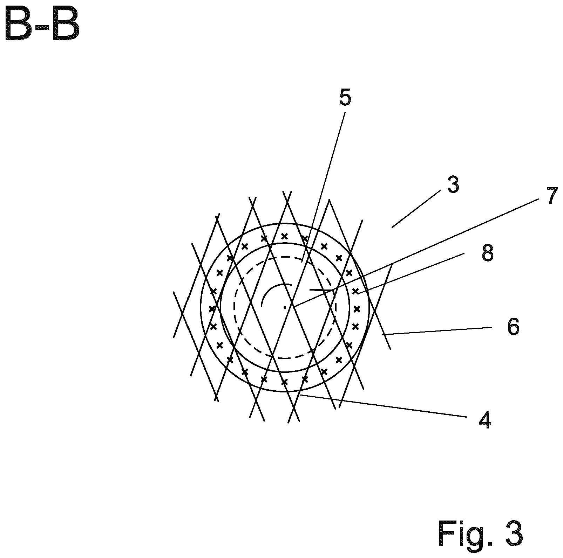

Der Funktionsbereich 5 ist der Flächenbereich, der an einen im Abstandshalter 3 ausgebildeten Resonatorraum 7 angrenzend angeordnet wird und an dem Strahlung reflektiert und verstärkt wird. Der Funktionsbereich 5 ist geringfügig größer als der Durchmesser des in die Fügefläche 4 mündenden Resonatorraumes 7. In **Fig. 3** ist der Funktionsbereich 5 dargestellt, innerhalb der Strichlinie liegend. Der Funktionsbereich 5 kann funktionell bedingt plan, sphärisch, asphärisch oder freigeformt sein, je nachdem, ob er die Strahlung nur reflektieren oder auch formen soll. Der Fügebereich 6, in **Fig. 3** außerhalb der Strichlinie liegend dargestellt, ist unabhängig von der Ausführung des Funktionsbereiches 5, an jedem der Spiegel 1, 2 plan. Bei funktionsgerechter Anordnung der Funktionsbereiche 5 zum Abstandshalter 3, positionieren sich die Fügebereiche 6 jeweils parallel zu einer der Fügeflächen 4.

Es ist erfindungswesentlich, dass die Fügebereiche 6, unabhängig von der Form der Funktionsbereiche 5 plan sind, um erfindungsgemäß den optischen Resonator vorläufig durch Ansprengen zu fügen. Im Falle von Spiegeln mit einer nicht planen Spiegelfläche, wie einer konkaven Spiegelfläche, deutlicher in **Fig. 2** zu sehen, bedeutet dies einen erhöhten Fertigungsaufwand für die Spiegel, in dem um den sphärischen Funktionsbereich 5 ein ringförmiger planer Fügebereich gefertigt wird. Der erhöhte Fertigungsaufwand zahlt sich jedoch in dem Vorzug aus, dass eine vorläufige Verbindung durch Ansprengen geschaffen werden kann.

Der Abstandshalter 3 ist hier in zylindrischer Form ausgebildet und weist zwei zueinander parallele Fügeflächen 4 auf.

Vor der Montage werden wenigstens die Fügeflächen 4 am Abstandshalter 3 und die Funktionsflächen an den Spiegeln 1, 2 gereinigt. Anschließend werden die Spiegel 1, 2 mit ihren Funktionsflächen zu den Fügeflächen 4 am Abstandshalter 3 positioniert, justiert und angesprengt. Damit wird eine vorläufige Verbindung geschaffen, die jeweils den gesamten Fügebereich 6 mit wenigstens einem Teil der Fügefläche 4 kraftschlüssig verbindet und eine durch Ansprengen gebildete Grenzfläche darstellt. Eine zuvor eingestellte Justierlage des Spiegels 1, 2 zum Abstandshalter wird wieder lösbar fixiert.

Der optische Resonator wird jetzt einer Funktionsprüfung unterzogen, z.B. in Form einer Cavity-Ring-Down Messung, sowie weiteren Inspektionen und Charakterisierungsmessungen. Werden die an ihn gestellten Anforderungen nicht erfüllt und z.B. Defekte oder eine fehlerhafte Justierung festgestellt oder Funktionskriterien, z.B. die Höhe der Finesse, werden nicht erfüllt, kann diese vorläufige Verbindung gelöst werden und nach erneuter Reinigung erneut hergestellt werden.

Die für die Herstellung dieser vorläufigen Verbindung notwendigen Schritte, insbesondere die Handhabung, die Positionierung und die Justierung der Einzelteile zueinander, Kontroll- und sonstige Hilfsprozesse sind so ausgestaltet, dass die Funktion des optischen Resonators erzielt und eingehalten wird, insbesondere repräsentiert durch das Erreichen einer sehr hohen Finesse z.B. > 300000. Für die Justage semikonfokaler Resonatoren, wie hier beispielhaft vorgeschlagen, ist das ungerichtete Fügen, d.h. eine passive Justierung durch Anschläge und Hilfsvorrichtungen, ausreichend. Bei anderen Resonatorgeometrien ist ein gerichtetes Fügen, d.h. eine aktive Justierung, notwendig, bei der die Funktion des Systems überwachend, während der Montage aktiv justiert wird.

Die durch Ansprengen hergestellte vorläufige Verbindung wird folgend in einem zweiten Schritt und in einem separaten Prozess, durch einen Laserschweißprozess lokal verstärkt. Während des Laserschweißens wird die Laserstrahlung jeweils durch die äu ßeren Planflächen der Spiegelsubstrate so in die Spiegel 1, 2 eingestrahlt, dass der Fokus auf bzw. nahe an die durch das Ansprengen gebildete Grenzfläche zwischen der Fügefläche am Abstandshalter 3 und dem Spiegel 1, 2 zu liegen kommt. Im Fokus werden durch nichtlineare Absorption der Laserstrahlung die Spiegel 1, 2 und der Abstandshalter 3 lokal begrenzt derart erwärmt, dass sich deren Materialien erweichen bzw. schmelzen. In diesem "Schmelzpool" verbinden sich die Spiegel 1 jeweils mit dem Abstandshalter 3 bei dem folgenden Erkalten stoffschlüssig. Durch geeignete Maßnahmen, d.h. die Relativbewegung von Werkstück und Laserfokus, kann der Schmelzpool in verschiedenartigen Geometrien, z.B. auch in Form geschlossener Konturen (Schweißbahn), bewegt werden und bildet die Verbindung in den gewünschten Teilbereichen aus. In **Fig. 3** ist eine ringförmige Schweißbahn 8 gezeigt. Sie liegt innerhalb des Bereiches der durch Ansprengen geschaffenen Grenzfläche. Da die Relativlage des Spiegels 1, 2 zum Abstandshalter3 durch das Ansprengen bereits fixiert ist, ist gesichert, dass der eingestellte und vorläufig fixierte Zustand erhalten bleibt und lediglich final fixiert wird. Die so hergestellte endgültige Verbindung ist nicht reversibel, unlösbar und auf die dauerhafte Vereinigung der Einzelteile angelegt. Der Justierzustand, d.h. der relative räumliche Bezug der Spiegel zueinander, wird dabei gegenüber der vorläufigen Verbindung mittels Ansprengen nicht verändert.

Die Laserwellenlänge des Bearbeitungslasers wird in einem Bereich gewählt, in dem die Spiegelsubstrate und der Abstandshalter weitestgehend transparent sind, also von der einfallenden Laserstrahlung - im konvergenten Strahl, außerhalb des Fokusbereichs - ohne lineare Absorption durchdrungen werden können. Typische Wellenlängen liegen im VIS und NIR Bereich.

Dabei wird die Laserstrahlung in Form von Pulszügen kurzer bzw. ultrakurzer Pulse appliziert, bevorzugt im Picosekunden-bis Femtosekundenregime, mit Wiederholraten im Bereich 10 kHz bis 10 MHz, bevorzugt im Bereich einige hundert kHz

Die Laserstrahlung erreicht im Fokus eine derart hohe Fluenz, von typisch >10¹² W/cm², sodass durch nichtlineare Absorptionsprozesse, insbesondere Mehrphotonenabsorption und Feldionisation, sowie folgende lineare Absorption im ausgebildeten Plasma, die Laserstrahlung lokal absorbiert wird und lokal zur Erwärmung und damit lokal zur Erweichung bzw. zum Umschmelzen der Grundwerkstoffe der Spiegelsubstrate bzw. des Abstandshalters führt.

Die Wiederholrate der Pulse wird derart an die Zeitkonstante der thermischen Diffusion im Material angepasst, dass eine Wärmeakkumulation erfolgen kann.

Der Fokus der Laserstrahlung wird auf bzw. nahe an die Grenzfläche jeweils zwischen das Spiegelsubstrat und den Abstandshalter gelegt, so dass das Spiegelsubstrat und der Abstandshalter im Bereich der thermischen Wechselwirkungszone lokal erweicht bzw. umgeschmolzen werden, diese Bereiche wechselweise ineinander übergehen, wodurch sich die Verbindung lokal ausbildet.

Die resultierende Wechselwirkungszone der umgeschmolzenen Bereiche, die die eigentliche Verbindung ausbildet, ist räumlich eng begrenzt, z.B. in Form von individuellen Schweißblasen oder kontinuierlichen Schweißbahnen ausgestaltet. Bevorzugt stellt die Verbindung jeweils eine den Funktionsbereich 6 einschließende ringförmige Schweißbahn dar.

Die Lage der Wechselwirkungszone (Schmelzpool, Schweißblase, Schweißbahn) wird mittels geeigneter Technik, z.B. NC-gesteuerter Verfahrsysteme oder Laserablenksysteme (Scanner) auf den Einzelteilen bestimmungsgemäß platziert.

Die Vorschubgeschwindigkeit wird mit den Laserparametern, insbesondere der Pulsdauer, der Wiederholrate und der Pulsenergie, und den thermophysikalischen Eigenschaften der Substratmaterialien abgestimmt, so dass eine homogene, gleichförmige und symmetrische Form des Schmelzpools gebildet wird.

Durch den räumlich eng begrenzten Eintrag thermischer Energie werden die Substrate und die auf ihnen aufgebrachten optischen Funktionsschichten sowie der Abstandshalter abseits der Wechselwirkungszone nur in geringem Maße erwärmt, so dass eine Schädigung vermieden und eine Veränderung der Eigenschaften der Funktionsschichten verhindert wird. Außerdem werden Deformationen der Spiegelsubstrate und mechanische Spannungen vermieden bzw. minimiert.

Die Verbindungen des erfindungsgemäß gefügten optischen Resonators zeigen alle Vorzüge, die eine mit einem Ultrakurzpulslaser geschweißte Verbindung haben kann. Gleichzeitig wird durch das vorläufige Fügen durch Ansprengen ein optischer Resonator gebildet mit all seinen Parametern, die geprüft werden können, bevor ein endgültiges Fügen von statten geht. Dabei ist es einem Fachmann nicht nahegelegt, das Ansprengen als vorläufiges Fügen mit dem Laserschweißen als endgültiges Fügen zu kombinieren. Spiegel mit einer sphärischen, asphärischen oder freigeformten Spiegelfläche, wie sie üblicherweise ohne einen planen Randbereich hergestellt werden, lassen sich nicht ansprengen. Bei der Entwicklung eines neuen Verfahrens oder Verbesserung eines Verfahrens hat der Fachmann immer im Blick, dass sich dieses neue Verfahren bzw. das verbesserte Verfahren bestimmungsgemäß unbeschränkt einsetzen lässt. Er würde einen Spiegel der sich durch laserschweißen mit dem Abstandshalter verbinden lässt nicht ohne weiteres modifizieren.

Die resultierende Verbindung weist eine sehr hohe mechanische Festigkeit und Beständigkeit, sowie eine hohe Robustheit gegen klimatische Wechsellasten, Luftfeuchtigkeit, thermischen Schock, sowie verschiedene mechanische Belastungen, wie insbesondere Schock und Vibration, auf. Die so hergestellte optische Kavität erhält daher ihre hohe Finesse als Baugruppe dauerhaft. Die sehr hohe Festigkeit erlaubt eine Miniaturisierung der Einzelteile. Durch das vorläufige Fügen durch Ansprengen und die damit zur Wirkung kommenden Adhäsionskräfte, bedarf es während des Laserschweißens keines zusätzlichen Fügedrucks.

Ein erfindungsgemäßer optischer Resonator ist mechanisch stabil und unempfindlich gegen Umgebungseinflüsse, z.B. mechanische Vibrationen, mechanischen Schock und klimatische Belastungen.

### Bezugszeichenliste

- 1: Planspiegel
- 2: Konvexspiegel
- 3: Abstandshalter
- 4: Fügefläche
- 5: Funktionsbereich
- 6: Fügebereich
- 7: Resonatorraum
- 8: Schweißbahn

## Patentansprüche

1. Mehrstufiges Verfahren zur Montage und zum Fügen eines optischen Resonators mit folgenden Verfahrensschritten:
a) Bereitstellen eines Abstandshalters (3) mit wenigstens zwei Fügeflächen (4) und mindestens zwei Spiegeln (1, 2), jeweils ein Spiegelsubstrat und eine Funktionsschicht aufweisend, wobei die Funktionsschicht einen Funktionsbereich (5) und einen Fügebereich (6) bildet,
b) Reinigen der Fügeflächen (4) und der Funktionsschichten,
c) Montage und Justage der mindestens zwei Spiegel (1, 2) am Abstandshalter (3), so dass jeweils der Funktionsbereich (5) an einen im Abstandshalter (3) ausgebildeten Resonatorraum (7) grenzt und der Fügebereich (6) einer der Fügeflächen (4) gegenüberliegt,
d) Vorläufiges Fügen der mindestens zwei Spiegel (1, 2) an dem Abstandshalter (3), wobei die Spiegel (1, 2) mit ihren Fügebereichen (6) an die Fügeflächen (4) eine Grenzfläche bildend angesprengt werden,
e) Prüfen der Funktionsfähigkeit des optischen Resonators und
f) Endgültiges Fügen der Fügebereiche (6) an die Fügeflächen (4) durch Laserschei-ßen mit einer Laserstrahlung eines Ultrakurzpulslasers, wenn die Funktionsfähigkeit bestätigt wird oder Wiederholung der Verfahrensschritte b - e, wenn die Funktionsfähigkeit nicht bestätigt wird.

2. Mehrstufiges Verfahren zur Montage und zum Fügen eines optischen Resonators nach Anspruch 1, **dadurch gekennzeichnet, dass** ein für das Laserschweißen erforderlicher Fügedruck durch die mit dem Ansprengen gebildeten Adhäsionskräfte bewirkt wird.

3. Mehrstufiges Verfahren zur Montage und zum Fügen eines optischen Resonators nach Anspruch 1 oder 2, **dadurch gekennzeichnet, dass** die Laserstrahlung jeweils über die Spiegel (1, 2) auf oder an der durch das Ansprengen gebildete Grenzfläche fokussiert wird.

4. Mehrstufiges Verfahren zur Montage und zum Fügen eines optischen Resonators nach einem der vorherigen Ansprüche, **dadurch gekennzeichnet, dass** eine den Funktionsbereich (6) einschließende ringförmige Schweißbahn gebildet wird.

5. Optischer Resonator mit wenigstens zwei Spiegeln (1, 2) und einem Abstandshalter (3), mit wenigstens zwei Fügeflächen (4), wobei die zwei Spiegel (1, 2), jeweils ein Spiegelsubstrat und eine Funktionsschicht aufweisen und die Funktionsschicht jeweils einen Funktionsbereich (5) bildet, der an einen im Abstandshalter (3) ausgebildeten Resonatorraum (7) grenzt und einen Fügebereich (6) bildet, der mit einem der Fügeflächen (4) über eine Schweißbahn (8) stoffschlüssig verbunden ist, **dadurch gekennzeichnet, dass** der Funktionsbereich (5) wenigstens eines der wenigstens zwei Spiegel (1, 2) eine sphärische, asphärische oder freigeformte Form aufweist und die Fügebereiche (6) aller Spiegel (1, 2) Planflächen darstellen.

6. Optischer Resonator nach Anspruch 5, **dadurch gekennzeichnet, dass** die Fügebereiche (6) jeweils ringförmig sind und einen größeren Innendurchmesser aufweisen, als der Resonatorraum (7) einen Außendurchmesser aufweist, in eine der Fügefläche (4) mündend.

7. Optischer Resonator nach Anspruch 5 oder 6, **dadurch gekennzeichnet, dass** die Schweißbahn (8) schmaler als der Fügebereich (6) ist.

8. Optischer Resonator nach Anspruch 7, **dadurch gekennzeichnet, dass** die Schweißbahn (8) an eine äußere Flächenbegrenzung des Fügebereiches (6) angrenzt.
